# EUROPEAN PATENT APPLICATION

(11) **EP 4 660 795 A1**
(43) Date of publication of application: **10.12.2025**
(21) Application number: 23919537.3
(22) Date of filing: 25.12.2023
(51) Int. Cl.: G06F 9/451

(54) **APPLICATION PROGRAM PROCESSING METHOD AND APPARATUS, ELECTRONIC DEVICE, AND STORAGE MEDIUM**

(30) Priority: 03.02.2023 CN 202310078985
(71) Applicant: GUANGDONG OPPO MOBILE TELECOMMUNICATIONS CORP., LTD., Dongguan, Guangdong 523860 (CN)
(72) Inventor: WANG, Zhaojin, Dongguan, Guangdong 523860 (CN); ZHANG, Guanqun, Dongguan, Guangdong 523860 (CN); ZHAO, Pengbo, Dongguan, Guangdong 523860 (CN)
(74) Representative: Novagraaf Technologies
(86) International application number: PCT/CN2023/141503
(87) International publication number: WO 2024/159975

(57) **Abstract**

An application processing method is performed by an electronic device. The electronic device includes a first processor and a second processor, the first processor running a first operating system, the second processor running a second operating system. The method includes: entering an application management interface in the first operating system, the application management interface displaying an application processing entry of a first application installed in the second operating system; and in response to a triggering operation performed on the application processing entry of the first application, entering a management item interface of the first application. An application management item of the first application is displayed in the management item interface of the first application.

## Description

### CROSS REFERENCE TO RELATED APPLICATIONS

The present application claims the priority of the Chinese patent application No. 202310078985.9, filed on February 3, 2023, in the title of "METHOD OF PROCESSING APPLICATION, APPARATUS, ELECTRONIC DEVICE, AND STORAGE MEDIUM", contents of which are incorporated herein by its entireties.

### TECHNICAL FIELD

Embodiments of the present disclosure relate to the technical field of computers, and more specifically, to an application processing method, an apparatus, an electronic device, and a storage medium.

### BACKGROUND

In order to improve a battery life, an electronic device may be configured with a dual-core and dual-system auto-switching scheme in which some power-consuming applications may be run in one operating system of dual systems. When an application needs to be run in a current operating system of the electronic device but is installed in the other operating system, the electronic device may switch to the other operating system to run the application.

### SUMMARY

The present disclosure provides an application processing method, an apparatus, an electronic device, and a storage medium.

In a first aspect, the present disclosure provides an application processing method, performed by an electronic device. The electronic device includes a first processor and a second processor, the first processor running a first operating system, the second processor running a second operating system. The method includes:
entering an application management interface in the first operating system, wherein an application processing entry of a first application installed in the second operating system is displayed in the application management interface; and
in response to a triggering operation performed on the application processing entry of the first application, entering a management item interface of the first application, wherein an application management item of the first application is displayed in the management item interface of the first application.

In a second aspect, the present disclosure provides an application processing apparatus, configured in an electronic device. The electronic device includes a first processor and a second processor, the first processor running a first operating system, the second processor running a second operating system. The application processing apparatus includes the following.

A display module is configured to enter an application management interface in the first operating system. An application processing entry of a first application installed in the second operating system is displayed in the application management interface.

The display module is further configured to enter the management item interface of the first application in response to a triggering operation performed on the application processing entry of the first application, wherein an application management item of the first application is displayed in the management item interface of the first application.

In a third aspect, the present disclosure provides an electronic device, including a memory and a processor. The memory stores a computer program; the computer program, when being executed by the processor, causes the processor to perform following operations.

An application management interface is entered in the first operating system. An application processing entry of a first application installed in the second operating system is displayed in the application management interface.

In response to a triggering operation performed on the application processing entry of the first application, a management item interface of the first application is entered. An application management item of the first application is displayed in the management item interface of the first application.

In a fourth aspect, the present disclosure provides a computer readable storage medium, having a computer program stored thereon. The computer program, when being executed by a processor, causes the processor to perform following operations.

An application management interface is entered in the first operating system. An application processing entry of a first application installed in the second operating system is displayed in the application management interface.

In response to a triggering operation performed on the application processing entry of the first application, a management item interface of the first application is entered. An application management item of the first application is displayed in the management item interface of the first application.

In a fifth aspect, the present disclosure provides a computer program product, including a computer program. The computer program, when being executed by a processor, implements following operations.

An application management interface is entered in the first operating system. An application processing entry of a first application installed in the second operating system is displayed in the application management interface.

In response to a triggering operation performed on the application processing entry of the first application, a management item interface of the first application is entered. An application management item of the first application is displayed in the management item interface of the first application.

### BRIEF DESCRIPTION OF THE DRAWINGS

In order to more clearly illustrate technical solutions in embodiments of the present disclosure, accompanying drawings used in the embodiments will be briefly introduced below. Obviously, the accompanying drawings in the following description show only some of the embodiments of the present disclosure, and any ordinary skilled person in the art may obtain other accompanying drawings based on these drawings without creative work.
FIG. 1 is a flow chart of an application processing method according to an embodiment of the present disclosure.
FIG. 2 is a flow chart of a second operating system obtaining application processing information according to an embodiment of the present disclosure.
FIG. 3 is a flow chart of a first operating system obtaining application processing information of a first application installed in the second operating system according to an embodiment of the present disclosure.
FIG. 4 is a flow chart of the first operating system obtaining an application processing entry of the first application installed in the second operating system according to an embodiment of the present disclosure.
FIG. 5 is a schematic view of interfaces showing the application processing method according to an embodiment of the present disclosure.
FIG. 6 is a flow chart of the first operating system controlling the second operating system to process the first application according to an embodiment of the present disclosure.
FIG. 7 is a flow chart of the second operating system processing the first application according to an embodiment of the present disclosure.
FIG. 8 is a structural schematic diagram of an application processing apparatus according to an embodiment of the present disclosure.
FIG. 9 is an internal structural schematic view of an electronic device according to an embodiment of the present disclosure.

### DETAILED DESCRIPTIONS

In order to make objectives, technical solutions and advantages of the present disclosure more clearly understood, the present disclosure is described in further details in the following by referring to the accompanying drawings and embodiments. It should be understood that specific embodiments described herein are only for explaining the present disclosure and do not limit the present disclosure.

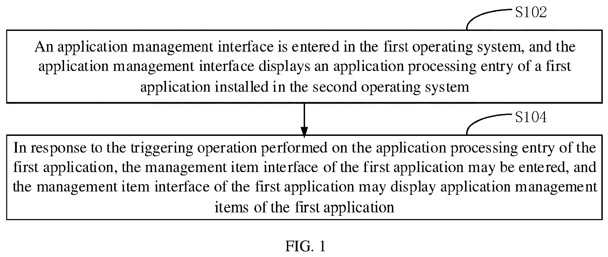

In an embodiment, as shown in FIG. 1, an application processing method is provided. The present embodiment is illustrated based on an example in which the method is performed by an electronic device. The electronic device may be a terminal or a server. It may be understood that the method may alternatively be performed by a system including a terminal and a server and may be realized based on interaction of the terminal and the server. The electronic device may be, but not limited to, a personal computer, a laptop computer, a smart phone, a tablet, an Internet of Things (IoT) device, and a portable wearable device. The IoT device may be a smart loudspeaker, a smart TV, a smart air conditioner, a smart vehicle-mounted device, a smart car, and the like. The portable wearable device may be a smart watch, a smart bracelet, a head-mounted device, and the like.

In the present embodiment, the application processing method may be performed by an electronic device including a first operating system and a second operating system. The application processing method may include following operations

In an operation S102, an application management interface is entered in the first operating system, and the application management interface displays an application processing entry of a first application installed in the second operating system.

An operating system (OS) is a set of interrelated system software programs that supervise and control computer operations, employ and run hardware and software resources, and provide public services to organize user interactions.

In the present disclosure, the electronic device may include a first processor and a second processor. The first processor and the second processor may be different processors or may be different processing cores of one processor.

It may be understood that the first processor of the electronic device may run the first operating system, and the second processor may run the second operating system.

The first application may be installed in the second operating system, and a second application may be installed in the first operating system. The first application program or the second application program may be a systemic application or a third-party application.

The first operating system may be executed by the first processor to achieve functions corresponding to the first operating system. The second operating system may be executed by the second processor to achieve functions corresponding to the second operating system.

When the second operating system is an operating system of a power consumption saving type, applications of the electronic device having power consumption higher than a preset power consumption threshold may be installed in the second operating system. That is, any application having the power consumption higher than the preset power consumption threshold may be treated as the first application, and power consumption may be saved when the first application is being run on the second operating system. In this way, battery level consumption may be reduced, endurance of the electronic device may be improved. The preset power consumption threshold may be determined as desired. The application having the power consumption higher than the preset power consumption threshold may be a power-consuming application.

It may be understood that, when the electronic device is in a certain operation mode or state, the first operating system and the second operating system may both be in a running state. Further, at this moment, the first operating system may be running at a foreground, and the second operating system may be running at a background.

The application management interface may be an interface for managing applications installed in the electronic device. The application management interface may display the application processing entry of each first application installed in the second operating system. The application processing entry may be an entry into a management item interface. The application management entry may be an identifier of the application, an icon indicating the entry, or the like, which will not be limited herein. Exemplarily, clicking on the identifier of a certain application may trigger an entry into the management item interface of the certain application.

The application management interface may further display an application processing entry for a second application installed in the first operating system, and may further display a setting item for the first application or the second application, which will not be limited herein.

In some embodiments, the electronic device may launch an application management program in the first operating system and displays an initial interface of the application management application. The application management entry may be displayed in the initial interface of the application management application. In response to a triggering operation performed on the application management entry, the application management interface is entered, and the application management interface may display the application processing entry of the first application installed in the second operating system.

The application management program may be used to manage applications installed in the electronic device. Exemplarily, the application management program may be a systemic application "mobile phone manager" installed in the first operating system of the electronic device. The systemic application "mobile phone manager" may uninstall an application, stop running an application, obtain relevant data, or set various permissions, and so on.

In an operation S104, in response to the triggering operation performed on the application processing entry of the first application, the management item interface of the first application may be entered, and the management item interface of the first application may display application management items of the first application.

The management item interface of the first application may be an interface for displaying management items of the first application.

The management item interface of the first application program may display application management items of the first application, and each of the application management items may be an item of the application program that is to be processed.

In some embodiments, the application management item of the first application may include items of information displaying and items of application management. The items of information displaying are configured to display information of the application. The items of application management are configured to manage the application.

Exemplarily, the items of information displaying may be one or more of: displaying an application version number, displaying an application space size, and so on. The items of application management may be one or more of: clearing memory data, clearing cache data, uninstalling the application, and force stopping the application, and the like.

In some embodiments, when the electronic device is running the first operating system, in response to the triggering operation performed on the application processing entry of the first application, the electronic device may enter and display the management item interface of the first application. The triggering operation may be one or more of: a click operation, a long-press operation, or a swipe operation, and the like, which will not be limited herein.

For the application processing method in the art, operating systems may be frequently switched therebetween, and therefore, resources of the electronic device may be wasted. According to the application processing method in the above, the electronic device, in the first operating system, enters the application management interface. The application management interface may display the application processing entry of the first application installed in the second operating system. In response to the triggering operation performed on the application processing entry of the first application, the management item interface of the first application may be entered. The management item interface may display the application management items of the first application. That is, the electronic device may display, in the first operating system, information such as the application management items of the first application installed in the second operating system. In this way, the information of the first application may be obtained without switching to the second operating system, and therefore, the operating systems may not be frequently switched therebetween, and the resources of the electronic device may be saved.

In an embodiment, in response to the triggering operation performed on the application processing entry of the first application, the operation of entering the management item interface of the first application which may display the application management items of the first application may include following operations. In response to the triggering operation performed on the application processing entry of the first application, the management item interface of the first application may be entered, and application processing information of the first application may be obtained. After obtaining the application processing information of the first application is completed, the application management item of the first application may display an application management item of the first application carrying the application processing information.

The application processing information of the first application may include one or more of: an application version number of the first application, an application space size of the first application, a user data size of the first application, a cache data size of the first application, and a running state of the first application.

In some embodiments, when the electronic device is running in the first operating system, in response to the triggering operation performed on the application processing entry of the first application, the electronic device may enter the management item interface of the first application and may obtain the application processing information of the first application from the second operating system. After obtaining the application processing information of the first application is completed, the electronic device may update the management item interface of the first application, and the updated management item interface may display an application management item of the first application carrying the application processing information.

Exemplarily, the application management item of carrying the application processing information may be a cache clearing item showing a cache size, a force stop item showing a current running state, a memory data clearing item, and the like, which will not be limited herein.

In the present embodiment, in response to the triggering operation performed on the application processing entry of the first application, the electronic device may enter the management item interface of the first application and obtain the application processing information of the first application. In a case that obtaining the application processing information of the first application is completed, the management item interface of the first application may display the application management item of the first application carrying the application processing information. In this way, relevant information of each application management item may be displayed more accurately, a user may not need to perform the triggering operations for a plurality of times due to not obtaining the relevant information of the application management item, such that the resources of the electronic device may be saved.

In an embodiment, the operation of obtaining the application processing information of the first application may include following operations. The first operating system may send a first application information request to the second operating system. The second operating system, in response to the first application information request, may send the application processing information of the installed first application to the first operating system. The first operating system may obtain the application processing information of the first application returned from the second operating system.

The first application information request may be a request for requesting the application processing information. The first application information request may include the identifier of the first application of the triggering operation.

When the second operating system receives the first application information request, the second operating system may obtain the application processing information of the first application based on the identifier of the first application in the first application information request; and may send the application processing information of the first application to the first operating system.

In some embodiments, when the electronic device is in the first operating system, the electronic device may send the first application information request to the second operating system via a communication channel between the first operating system and the second operating system; and may obtain the application processing information of the first application returned by the second operating system via the communication channel between the first operating system and the second operating system.

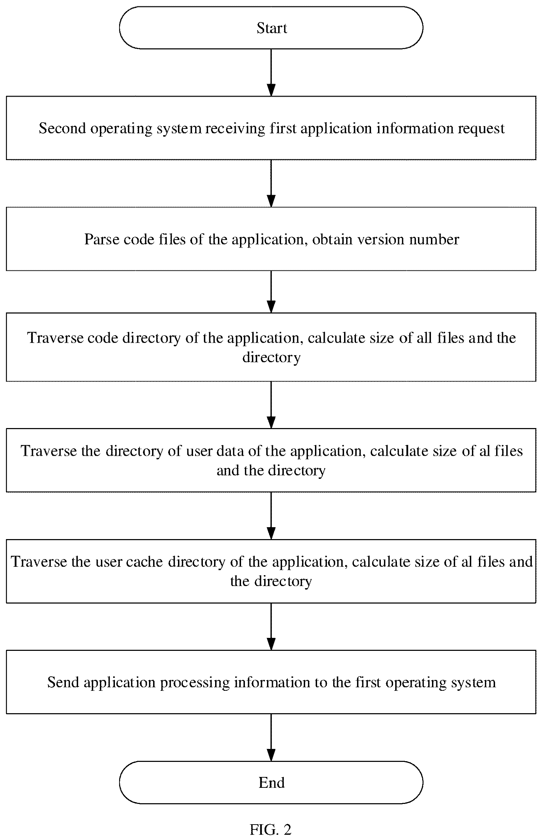

As shown in FIG. 2, the second operating system may receive the first application information request. The first application information request may include the identifier of the first application of the triggering operation, such as a package name of the first application. The second operating system may parse a code file of the application to obtain the version number. The code file may be a json file. The second operating system may traverse a code directory of the application and may calculate a size of all files and the code directory to obtain the application space. The second operating system may traverse a user data directory of the application and may calculate a size of all files and the user data directory to obtain a memory data size. The second operating system may traverse a user cache directory of the application and calculate a size of all files and the user cache directory to obtain a cache data size. The second operating system may send the application processing information to the first operating system.

In the present embodiment, the electronic device may send the first application information request to the second operating system. The second operating system, in response to the first application information request, may send the application processing information of the installed first application to the first operating system. In this way, the application processing information of the first application program may be obtained in the first operating system, the application processing information of the first application program installed in the second operating system may be obtained without switching from the first operating system to the second operating system. An efficiency of obtaining, at the first operating system, the application processing information of the first application installed in the second operating system may be improved, frequent switching between the first operating system and the second operating system may be avoided, and the resources of the electronic device may be saved.

In an embodiment, after sending the first application information request to the second operating system, the method may further include following operations. In a case that the first operating system does not receive the application processing information returned from the second operating system within a preset time length, the operation of sending the first application information request to the second operating system may be repeatedly performed, and sending the first application information request may be stopped when a first stop condition is satisfied. The preset time length may be started counting from a time point at which the first operating system sends the first application information request.

The preset time length may be set as desired. Exemplarily, the preset time length may be 1 millisecond (ms) or 2 ms, and so on.

The first stop condition may be a condition for stopping sending the first application information request.

The first stop condition may include that the number of times the first application information request being sent reaches a preset number of times, or that the application processing information returned by the second operating system is not received within a stopping time length. The first stop condition may not be limited herein. The preset number of times and the stopping time length may be set as desired. Exemplarily, the preset number of times may be 4, and the stopping time length may be 1 minute.

In some embodiments, in the case that the first operating system does not receive the application processing information returned from the second operating system within the preset time length, it may be indicated that the second operating system does not respond to the first application information request, and the operation of sending the first application information request to the second operating system may be performed again. When the first stop condition is satisfied, it may be indicated that the request fails, and the operation of sending the first application information request may be stopped.

In some embodiments, the electronic device, after stopping sending the first application information request, may generate a prompt message to indicate a user that the request for the application processing information fails and that the operation of sending the first application information request is stopped.

In some embodiments, in a case that the application processing information returned from the second operating system is received when a first response time length does not reach a first preset time length, the application management item of the first application carrying the application processing information may be displayed in the management item interface of the first application after obtaining the application processing information of the first application is completed.

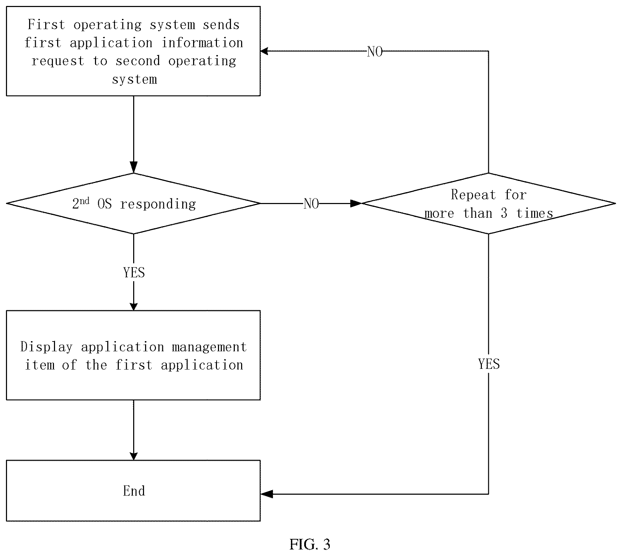

As shown in FIG. 3, the first operating system may send the first application information request to the second operating system. In a case that the second operating system responds to the first application information request, i.e., the first operating system receives the application processing information of the first application returned from the second operating system, the application management items of the first application may be displayed. In a case that the second operating system does not respond to the first application information request, i.e., the first operating system does not receive the application processing information of the first application returned from the second operating system, the operation of the first operating system sending the first application information request to the second operating system may be performed again. When the operation of the first operating system sending the first application information request to the second operating system is repetitively performed for more than three times, the operation of the first operating system sending the first application information request to the second operating system may be stopped.

In the present embodiment, in the case that the application processing information returned by the second operating system is not received within the preset time length, the operation of sending the first application information request to the second operating system may be performed again. In this way, compatibility of application processing may be improved, so as to improve a success rate of requesting the application processing information, and sending the first application information request may be stopped when the first stop condition is satisfied.

In an embodiment, before obtaining the application processing information of the first application returned from the second operating system, the method may further include following operations. A preset waiting image may be displayed during a time length in which the second operating system obtains the application processing information of the first application. When the application processing information of the first application returned from the second operating system is obtained, displaying the preset waiting image may be eliminated or hidden.

The preset waiting image may be a preset animation (a loading animation), a preset picture or a preset prompt message, and so on, which will not be limited herein.

It is understood that when the electronic device is in the first operating system, the electronic device may obtain more detailed application processing information of the first application, which may be more time-consuming and takes a longer time, and this may be because the second operating system needs to calculate the application processing information such as sizes of various data. Therefore, the preset waiting image may be displayed within the time length in which the second operating system obtains the application processing information of the first application; and when the second operating system returns the application processing information of the first application, displaying the preset waiting image may be eliminated or hidden. In the case that obtaining the application processing information of the first application is completed, the management item interface of the first application may display the application management item of the first application carrying the application processing information.

In the present embodiment, the preset waiting image may be displayed within the time length in which the second operating system obtains the application processing information of the first application, and when the application processing information of the first application returned from the second operating system is obtained, displaying the preset waiting image may be eliminated or hidden. In this way, interactivity between the user and the electronic device during application processing may be improved.

In an embodiment, entering the application management interface, when the electronic device being in the first operating system, may include following operations. In the first operating system, in response to the triggering operation performed on the application management entry, the application management interface may be entered, and application information of the first application installed in the second operating system may be obtained. The application information of the first application may include the application processing entry and the application processing information of the first application. The operation of obtaining, in response to the triggering operation performed on the application processing entry of the first application, the application processing information of the first application may include following operations. In response to the triggering operation performed on the application processing entry of the first application, the application processing information of the first application may be obtained from the application information.

The application information of the first application may be information related to the first application. The application information of the first application may include the application processing entry and the application processing information of the first application, and may further include: information of a developer of the first application, a storage path of the first application, and so on, which will not be limited herein. The application processing entry may be the identifier of the first application, and the application processing information may include one or more of: an application version number of the first application, an application space size of the first application, a user data size of the first application, a cache data size of the first application, and a running state of the first application.

In some embodiments, the electronic device may launch the application management application in the first operating system and display the initial interface of the application management application. The initial interface of the application management application may display the application management entry. In response to the triggering operation performed on the application management entry, the application management interface may be entered, and the electronic device may obtain the application information of the first application installed in the second operating system. The electronic device may display the application processing entry of the first application installed in the second operating system. In response to the triggering operation performed on the application processing entry of the first application, the electronic device may obtain the application processing information of the first application from the application information.

In the present embodiment, the electronic device in the first operating system may enter, in response to the triggering operation performed on the application management entry, the application management interface and obtain the application information of the first application installed in the second operating system. The application information of the first application may include the application processing entry of the first application and the application processing information of the first application. The electronic device may directly obtain, in response to the triggering operation performed on the application processing entry of the first application, obtain the application processing information of the first application from the application information. The electronic device may not need to obtain the application processing information of the first application from the second operating system. In this way, the number of times of having interactions between the first operating system and the second operating system may be reduced, and the resources of the electronic device may be saved.

In an embodiment, the operation of entering the application management interface when the electronic device being in the first operating system, and displaying, in the application management interface, the application processing entry of the first application installed in the second operating system, may include following operations. When the electronic device is in the first operating system, in response to the triggering operation performed on the application management entry, the electronic device may enter the application management interface and obtain information of the application processing entry of the first application installed in the second operating system. After obtaining the information of the application processing entry of the first application is completed, the application management interface may display the application processing entry of the first application.

When the electronic device is in the first operating system, the electronic device may launch the application management application and display the initial interface. The initial interface may display the application management entry and other entries, such as a systemic application retrieval entry.

The electronic device may enter, in response to the triggering operation performed on the application management entry, the application management interface and may obtain the information of the application processing entry of the first application program installed in the second operating system. When obtaining the information of the application processing entry of the first application program is completed, the application management interface may be updated, and the application processing entry of the first application program may be displayed in the updated application management interface. The information of the application processing entry may include at least one of: a package name of the first application, a name of the first application, an icon of the first application, and other information of the first application.

In some embodiments, the electronic device may further obtain application information of the second application installed in the first operating system. The application information of the second application may include information of an application processing entry of the second application. After obtaining the information of the application processing entry of the second application is completed, the application management interface may be updated, and the application processing entry of the second application may be displayed in the updated application management interface.

It may be understood that accessing the application management interface in the first operating system has high requirements for system performance. The information of the application processing entry needs to be obtained quickly and displayed. Therefore, the information of the application processing entry of the first application program may be obtained in the first operating system, and the application processing information having more details may not be obtained. The application processing entry may include the package name of the application, the name of the application, and the icon of the application and so on, and obtaining the application processing entry may not be time-consuming. In this way, the application processing entry of the first application may be displayed more quickly in the application management interface.

In the present embodiment, the electronic device in the first operating system may enter, in response to the triggering operation performed on the application management entry, the application management interface and may obtain the information of the application processing entry of the first application installed in the second operating system. After obtaining the information of the application processing entry of the first application is complete, the application processing entry of the first application may be displayed in the application management interface. That is, the application processing entry of the first application installed in the second operating system may be displayed in the first operating system, frequent switching to the second operating system to enter the application processing entry of the first application may be avoided, and resources of the electronic device may be saved.

In an embodiment, obtaining the information of the application processing entry of the first application installed in the second operating system may include following operations. A second application information request may be sent to the second operating system. The second application information request may be used to instruct the second operating system to send the information of the application processing entry of the installed first application to the first operating system. The application processing entry of the first application returned by the second operating system may be obtained.

The second application information request may be a request for requesting information of the application processing entry. The second operating system may obtain, in response to the second application information request, the information of the application processing entry of each first application installed in the second operating system and may send the information of the application processing entry of the first application to the first operating system.

In some embodiments, the electronic device in the first operating system may send the second application information request to the second operating system via the communication channel between the first operating system and the second operating system and may obtain, via the communication channel between the first operating system and the second operating system, the information of the application processing entry of the first application returned by the second operating system.

In the present embodiment, the electronic device may send the second application information request to the second operating system to instruct the second operating system to send the information of the application processing entry of the installed first application to the first operating system. In this way, the electronic device in the first operating system may obtain the information of the application processing entry of the first application. The electronic device may obtain, from the first operating system to the second operating system, the information of the application processing entry of the first application installed in the second operating system without switching. The efficiency of obtaining, in the first operating system, the information of the application processing entry of the first application installed in the second operating system may be improved, and frequent switching between the first operating system and the second operating system may be avoided, and the resources of the electronic device may be saved.

In an embodiment, after sending the second application information request to the second operating system, the method may further include following operations. When the application processing entry returned by the second operating system is not received within a preset time length, the operation of sending the second application information request to the second operating system may be repeated. When a second stop condition is satisfied, the operation of sending the second application information request may be stopped.

The preset time length may be set as desired. Exemplarily, the second preset time length may be 0.5 ms or 1 ms, and so on...

The second stop condition may be a condition for stopping sending the second application information request. The second stop condition may include that the number of times of sending the second application information request reaches a preset number of times, or that the information of the application processing entry returned by the second operating system is not received within a stopping time length, which will not be limited herein. Both the preset number of times and the stopping time length may be set as desired. Exemplarily, the preset number of times may be 3, and the stopping time length may be 1 minute.

In some embodiments, when the information of the application processing entry returned by the second operating system is not received a preset time length, it may be indicated that the second operating system does not respond to the instant second application information request. The operation of sending the second application information request to the second operating system may be repeated. When the second stop condition is satisfied, it may be indicated that the request fails, and the operation of sending the second application information request may be stopped.

In some embodiments, after stopping sending the second application information request, the electronic device may generate a prompt message to prompt the user that requesting the application processing entry fails and that sending the second application information request is stopped.

In some embodiments, when the application processing entry returned by the second operating system is received within the preset time period, after obtaining the information of the application processing entry of the first application is completed, the application processing entry of the first application may be displayed in the application management interface.

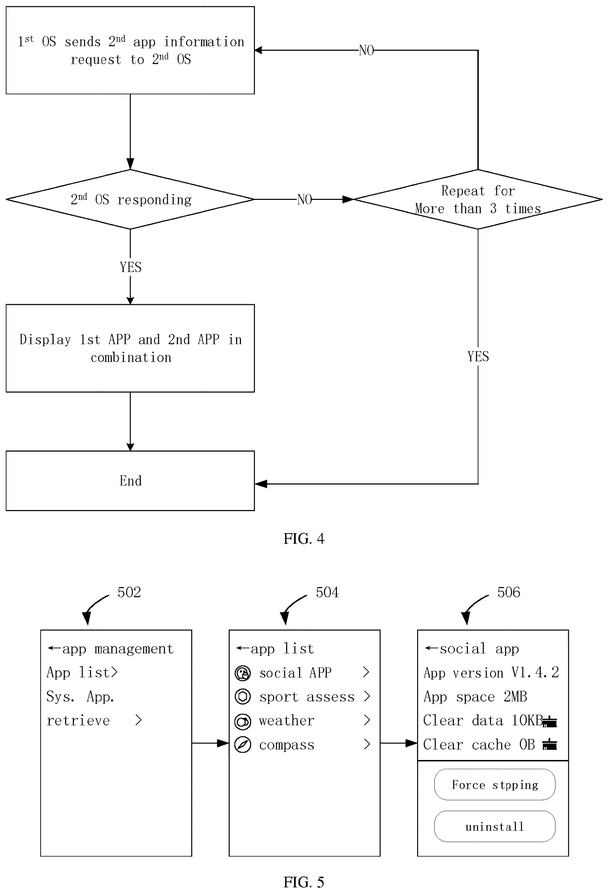

As shown in FIG. 4, the first operating system may send the second application information request to the second operating system. When the second operating system responds to the second application information request, i.e., the first operating system receives the information of the application processing entry of the first application returned by the second operating system, the application processing entry of the first application and the application processing entry of the second application may be displayed together. When the second operating system does not respond to the second application information request, i.e., the first operating system does not receive the information of the application processing entry of the first application returned by the second operating system, the operation of first operating system sending the second application information request to the second operating system may be repeated. The operation of first operating system sending the second application information request to the second operating system may be stopped when the operation is repetitively performed for more than three times.

In the present embodiment, when the application processing entry returned by the second operating system is not received within a preset time length, the operation of sending the second application information request to the second operating system may be repeated. In this way, compatibility of the application processing may be improved, and a success rate of requesting the information of the application processing entry may be increased. Sending the second application information request may be stopped when the second stop condition is satisfied.

In an embodiment, the above method may further include following operations. The electronic device in the first operating system may obtain, in response to the triggering operation performed on an application management entry, information of an application processing entry of a second application installed in the first operating system. After obtaining the information of the application processing entry of the first application is complete, the operation of displaying the application processing entry of the first application in the application management interface may include following operations. After obtaining the information of the application processing entry of the first application and the information of the application processing entry of the second application is completed, the application processing entry of the first application and the application processing entry of the second application may be displayed in the application management interface.

In some embodiments, the electronic device in the first operating system may obtain, in response to the triggering operation performed on the application management entry, the information of the application processing entry of the second application installed in the first operating system and the information of the application management entry of the first application installed in the second operating system. After obtaining the information of the application processing entry of the first application and the information of the application processing entry of the second application is completed, the application management interface may display the application processing entry of the first application and the application processing entry of the second application.

It may be understood that the user may know applications installed in the electronic device without needing to know in which operating system the applications are installed. That is, running of the application is insensible to the user. Therefore, the application processing entry of the first application and the application processing entry of the second application may both be displayed in the application management interface, facilitating the user to perform operations, avoiding forcing the user to learn specific operations.

In an embodiment, the application processing entry of the second application installed in the first operating system may further be displayed in the application management interface. The above method may further include following operations. In response to the triggering operation performed on the application processing entry of the second application, a management item interface of the second application may be entered. Application management items of the second application may be displayed in the management item interface of the second application.

In response to the triggering operation performed on the application management items of the second application, the second application performs processing accordingly.

The managing item interface of the second application may display the application management items of the second application, and the application management items may be items for performing specific processing on the application.

In some embodiments, the application management items of the second application may include: an information displaying item and an application management item. The information displaying item may be configured to display information of the application, and the application management item may be configured to perform management on the application.

Exemplarily, the information displaying item may be one or more of: displaying an application version number, displaying an application space size, and the like. The application management item may be one or more of: clearing memory data, clearing cache data, uninstalling an application and force stopping an application, and the like.

In some embodiments, the electronic device in the first operating system may enter and display, in response to the triggering operation performed on the application processing entry of the second application, the management item interface of the second application. The triggering operation may be one or more of: a click operation, a long press operation, or a swipe operation, and the like, which will not be limited herein.

In some embodiments, a result of processing the second application may be successful processing or failed processing, which will not be limited herein.

In some embodiments, after corresponding processing of the second application is completed, the electronic device may update the management item interface and display the result of processing the second application in the updated management item interface.

Exemplarily, after the electronic device completes the corresponding processing of the second application, when the result of processing is successfully clearing cache data, the electronic device may display, in the management item interface, successful clearing of the cache data and a current size of the cache data as 0. When the result of processing is failure in clearing the cache data, the electronic device may display, in the management item interface, failure in clearing the cache data and a size of the cache data that is not cleared.

In the present embodiment, the electronic device may further display, in the application management interface, the application processing entry of the second application installed in the first operating system. In response to the triggering operation performed on the application processing entry of the second application, the management item interface of the second application may be entered. The application management items of the second application may be displayed in the second application management interface. In response to the triggering operation performed on any of the application management items of the second application, corresponding processing of the second application may be performed. After the corresponding processing of the second application is completed, a processing result of the first application may be displayed. In this way, processing of the application in the first operating system and the application in the second operating system may be achieved, and the user may not sense the processing being performed on applications of two operating systems.

In an embodiment, in response to the triggering operation performed on the application processing entry of the second application, the operation of entering the management item interface of the second application and displaying the application management items of the second application in the management item interface of the second application, may include following operations. In response to the triggering operation performed on the application processing entry of the second application, the management item interface of the second application may be entered, and the application processing information of the second application may be obtained. After obtaining the application processing information of the second application is completed, an application management item of the second application carrying the application processing information may be displayed in the management item interface of the second application.

The application processing information of the second application may include one or more of an application version number, an application space size, a user data size, a cache data size, and a running state of the second application.

In some embodiments, the electronic device in the first operating system may enter, in response to the triggering operation performed on the application processing entry of the second application, the management item interface of the second application and obtain the application processing information of the second application. After obtaining the application processing information of the second application is completed, the management item interface of the second application may be updated, and the application management item of the second application carrying the application processing information may be displayed in the updated management item interface.

Exemplarily, the application management item carrying the application processing information may be: a cache clearing item carrying a cache size, a force stop item carrying a current running state, a memory data clearing item, and the like, which will not be limited herein.

In the present embodiment, the electronic device may enter, in response to the triggering operation performed on the application processing entry of the second application, the management item interface of the second application and may obtain the application processing information of the second application. After obtaining the application processing information of the second application is completed, the application management item of the second application carrying the application processing information may be displayed in the management item interface of the second application. In this way, relevant information of each application management item may be displayed more accurately, the user may not perform the triggering operations for a plurality of times due to not obtaining the relevant information of the application management items, such that the resources of the electronic device may be saved.

In an embodiment, the above method may further include following operations. In response to the triggering operation performed on the application management item of the first application, the first operating system may send a processing instruction generated corresponding to the triggering operation to the second operating system. The processing instruction may be configured to instruct the second operating system to perform a corresponding processing on the first application.

The processing instruction may include: an identifier of the first application and information of the application management item of the triggering operation. The processing instruction may include at least one of: a memory data clearing instruction, a cache data clearing instruction, a stop running application instruction, or an application uninstallation instruction. The processing instruction may further include at least one of: an application starting instruction, an instruction of activating a function of the application, which will not be limited herein. The memory data may be resident data stored in the memory by the first application, and the cache data may be temporary data stored in a cache by the first application.

The second operating system may receive the processing instruction; determine, based on the identifier of the first application carried by the processing instruction, the first application of the triggering operation from various first applications installed in the second operating system; and perform, based on information of the application management, corresponding processing on the application management item of the first application of the triggering operation.

In some embodiments, the electronic device in the first operating system may generate, in response to the triggering operation performed on the application management item of the first application, a processing instruction corresponding to the triggering operation performed on the application management item of the first application, and may send the processing instruction to the second operating system via the communication channel between the first operating system and the second operating system. The second processor of the second operating system may process, after receiving the processing instruction, the application management item corresponding to the triggering operation of the first application based on the processing instruction.

Exemplarily, the electronic device in the first operating system may send, in response to a triggering operation performed on the management item for clearing the cache of the first application A, a cache clearing processing instruction to the second operating system. The second operating system may clear the cache of the first application A based on the cache clearing processing instruction.

In the present embodiment, in response to the triggering operation performed on the application management item of the first application, the first operating system may send the processing instruction corresponding to the triggering operation to the second operating system to instruct the second operating system to perform the corresponding processing on the first application. That is, the electronic device in the first operating system may perform the corresponding processing on the first application installed in the second operating system, such that frequent switching between the first operating system and the second operating system may be avoided, and the resources of the electronic device may be saved.

In an embodiment, as shown in FIG. 5, the electronic device in the first operating system may launch the application management application and display the initial interface 502 of the application management application. The application management entry "application list" and an entry of "systemic application retrieval" may be displayed in the initial interface 502 of the application management application. In response to the triggering operation performed on the application management entry "application list", the application management interface 504 may be entered. The application processing entry of each application installed in the electronic device may be displayed in the application management interface 504. A social application and a compass application may be installed in the second operating system. An athletic ability evaluation application and a weather application may be installed in the first operating system. In response to a triggering operation performed on the application processing entry of the social application, the electronic device may enter an application management interface 506 of the social application. Application management items of the social application may be displayed in the application management interface 506 of the social application. The application management items of the social application may include displaying an application version number, displaying an application space, data clearing, cache clearing, force stopping, and uninstallation. In response to a triggering operation performed on a certain one of the application management items of the social application, a generated processing instruction may be sent to the second operating system. The generated processing instruction may be configured to instruct the second operating system to perform a processing, corresponding to the certain one application management item, on the social application. The data clearing may refer to clearing memory data of the social application, and the cache clearing may refer to clearing cache data of the social application.

In an embodiment, the above method may further include following operations. A processing result for the first application returned by the second operating system may be received, and information corresponding to the processing result may be displayed.

In some embodiments, the processing result for the first application may be a result of the processing being successful or a result of the processing being failed, which will not be limited herein.

In some embodiments, when the processing result indicates that the second operating system performs the processing successfully on the first application, the management item interface may be updated. Information corresponding to the processing result may be displayed in the updated management item interface. Alternatively, when the processing result indicates that the second operating system failed to perform the processing on the first application, the management item interface may not be updated, and the application management items continue being displayed in the management item interface.

When the processing result indicates that the second operating system performs the processing successfully on the first application, the management item interface may be updated, and the application management item carrying post-processing application processing information may be displayed in the updated management item interface, and a prompt message prompting that the processing is performed successfully may also be displayed. When the processing result indicates that the second operating system fails to perform the processing on the first application, the management item interface may not be updated, and the application management items carrying the application processing information before the processing may be displayed. Further, when the processing result indicates that the second operating system fails to perform the processing on the first application, and a prompting message prompting that the processing failed may also be displayed in the management item interface.

Exemplarily, when the electronic device in the first operating system receives the processing result of the first application returned by the second operating system, and when the processing result indicates that the cache data clearing is performed successfully, successful clearing of the cache data may be displayed in the management item interface, and a current size of the cache data may be displayed as 0. When the processing result indicates that the cache data clearing failed, clearing the cache data being failed may be displayed in the management item interface, the management item interface may not be updated, and a size of uncleared cache data may be displayed in the management item interface.

In the present embodiment, the electronic device in the first operating system may receive the processing result of the first application returned by the second operating system and display the information corresponding to the processing result. In this way, switching from the first operating system to the second operating system may be avoided, and a lag in image displaying caused by the switching may be avoided. The information corresponding to the processing result may be displayed in the first operating system, smoothness of the second operating system processing the application may be improved.

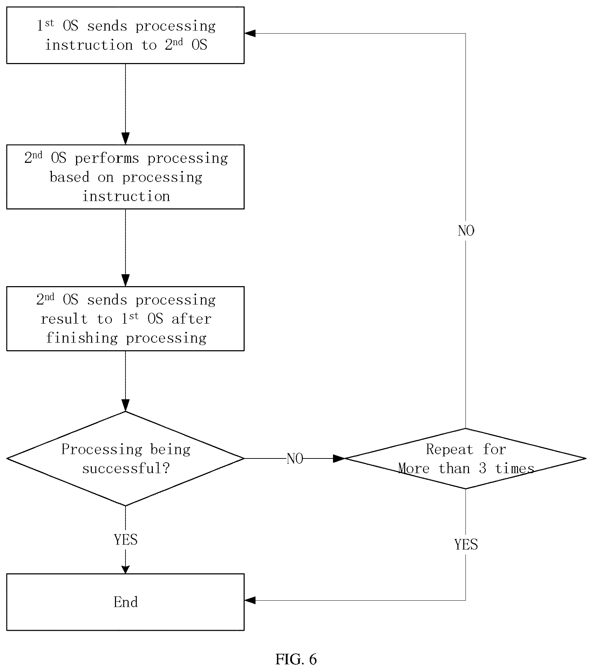

In an embodiment, as shown in FIG. 6, the first operating system may send the processing instruction to the second operating system. The second operating system may perform the processing corresponding to the processing instruction. The second operating system may send the processing result to the first operating system after the processing is completed. When the processing result indicates that the processing is performed successfully, the processing is finished. When the processing result indicates that the processing fails, the operation of the first operating system sending the processing instruction to the second operating system may be performed again, and the operation may be stopped when the operation is performed for more than 3 times.

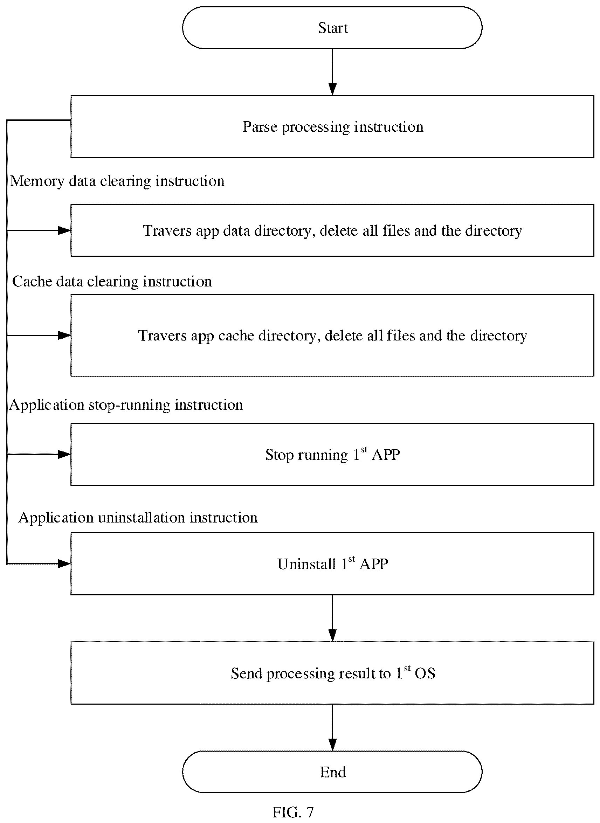

As shown in FIG. 7, the second operating system may parse the processing instruction. When the processing instruction is a memory data clearing instruction, the second operating system may traverse an application data directory and delete all files and directories. When the processing instruction is a cache data clearing instruction, the second operating system may traverse the application cache directory and delete all files and directories. When the processing instruction is an application stop-running instruction, the second operating system may stop running the first application. When the second operating system is an application uninstallation instruction, the second operating system may uninstall the first application. After the processing is completed, the second operating system may send the processing result to the first operating system.

In an embodiment, after receiving the processing result for the first application returned by the second operating system, the method may further include following operations. When the processing result indicates that the second operating system fails in performing the processing on the first application, the operation of sending the generated processing instruction to the second operating system may be performed again, and the operation of sending the generated processing instruction may be stopped when a third stop condition is satisfied.

The third stopping condition may be a condition for stopping sending the processing instruction. The third stopping condition may be determined as desired. The third stop condition may include that the number of times of sending the processing instruction reaches a preset number of times, or that the second operating system fails in processing the first application within a stopping time length. The third stopping condition may not be limited herein. Both the preset number of times and the stopping time length may be determined as desired. Exemplarily, the preset number of times may be 4, and the stopping time length may be 5 minutes.

In the present embodiment, when the processing result indicates that the second operating system fails in performing the processing on the first application, the operation of sending the generated processing instruction to the second operating system may be repeated. In this way, compatibility of the application processing may be improved, so as to improve the success rate of the second operating system processing the first application. Sending the processing instruction may be stopped when the third stopping condition is satisfied.

In an embodiment, another method of processing the application performed by the electronic device may be performed. The electronic device may include the first processor and the second processor. The first processor may run the first operating system, and the second processor may run the second operating system. The application processing method may include following operations.

In an operation A1, in response to the triggering operation performed on the application management entry, the application management interface may be entered in the first operating system, and operations A2-A4 and A5 may be performed.

In an operation A2, the second application information request may be sent to the second operating system; the second application information request may be used to instruct the second operating system to send, to the first operating system, the information of the application processing entry of the first application installed in the second operating system.

In an operation A3, when the information of the application processing entry returned by the second operating system is not received within a first preset time length, the operation of sending the second application information request to the second operating system may be repeated, and the operation of sending the second application information request may be stopped when the second stop condition is satisfied. The first preset time length may start counting at the time point when the first operating system sends the second application information request.

In an operation A4, within the first preset time length, the information of the application processing entry of the first application program returned by the second operating system may be received.

In an operation A5, the information of the application processing entry of the second application installed in the first operating system may be obtained.

An operation A6 may be performed. In the case that obtaining the information of the application processing entry of the first application program is completed and obtaining the information of the application processing entry of the second application program is completed, the application processing entry of the first application and the application processing entry of the second application may be displayed in the application management interface.

When the triggering operation is performed on the application processing entry of the first application in the application management interface, operations A7-A15 may be performed. When the triggering operation is performed on the application processing entry of the first application in the application management interface, operations A16-A17 may be performed.

In an operation A7, in response to the triggering operation performed on the application processing entry of the first application, the management item interface of the first application may be entered, and the first application information request may be sent to the second operating system. The first application information request may be used to instruct the second operating system to send the application processing information of the installed first application to the first operating system.

In an operation A8, the preset waiting image may be displayed during the time length in which the second operating system obtains the application processing information of the first application. When the application processing information of the first application returned by the second operating system is obtained, and displaying of the preset waiting image may be eliminated or hidden.

In an operation A9, when the application processing information returned by the second operating system is not received within the second preset time length, the operation of sending the first application information request to the second operating system may be repeated. Sending the first application information request may be stopped when the first stop condition is satisfied. The second preset time length may start counting at the time point when the first operating system sends the first application information request.

In an operation A10, the application processing information of the first application returned by the second operating system may be obtained within the second preset time length.

In an operation A11, in the case that obtaining the application processing information of the first application is completed, the application management item of the first application carrying the application processing information may be displayed in the management item interface of the first application.

In an operation A12, in response to the triggering operation performed on the application management item of the first application, the first operating system may send the processing instruction corresponding to the triggering operation to the second operating system. The processing instruction may be used to instruct the second operating system to perform the corresponding processing on the first application. The processing instruction may include at least one of: the memory data clearing instruction, the cache data clearing instruction, the application stop-running instruction, or the application uninstallation instruction.

In an operation A13, the processing result of the first application returned by the second operating system may be received.

In an operation A14, when the processing result indicates that the second operating system fails in performing the processing on the first application, the operation of sending the generated processing instruction to the second operating system may be repeated. The operation of sending the generated processing instruction may be stopped when the third stop condition is satisfied. Furthermore, the management item interface may not be updated, and the application management item may still be displayed in the management item interface.

In an operation A15, when the processing result indicates that the second operating system successfully performs the processing on the first application, the management item interface may be updated, and the information corresponding to the processing result may be displayed in the updated management item interface.

In an operation A16, in response to the triggering operation performed on the application processing entry of the second application, the management item interface of the second application may be entered, and the application processing information of the second application may be obtained.

In the case that obtaining the application processing information of the second application is completed, the application management item of the second application carrying the application processing information may be displayed in the management item interface of the second application.

In an operation A17, in response to the triggering operation performed on the application management item of the second application, the corresponding processing may be performed on the second application. The application management items of the second application may include at least one of: clearing memory data, clearing cache data, stopping running the application, or uninstalling the application.

In another embodiment, another method of processing the application is provided. The method may be performed by the electronic device. The electronic device may include the first processor and the second processor, the first processor may run the first operating system, and the second processor may run the second operating system.

The method may include the following operations.

In an operation B1, in response to the triggering operation performed on the application management entry, the application management interface may be entered in the first operating system, and operations B2-B4 and B5 may be performed.

In an operation B2, the third application information request may be sent to the second operating system. The third application information request may be used to instruct the second operating system to send, to the first operating system, the application information of the first application installed in the second operating system. The application information of the first application may include the information of the application processing entry of the first application and application processing information of the first application.

The third application information may be the request for requesting the application information.

In an operation B3, when the application information returned by the second operating system is not received within the third preset time length, the operation of sending the third application information request to the second operating system may be repeated. Sending the third application information request may be stopped when the fourth stop condition is satisfied. The third preset time length may start counting at the time point when the first operating system sends the third application information request.

The third preset time length may be set as desired. The fourth stop condition may be a condition for stopping sending the third application information request. The fourth stop condition may include that the number of times of sending the third application information request reaches the preset number of times, or that the information of the application processing entry returned by the second operating system is not received within the stopping time length. The fourth stop condition may not be limited herein. Both the preset number of times and the stopping time length may be set as desired. Exemplarily, the preset number of times may be 3, and the stopping time length may be 1 minute.

In an operation B4, the application information of the first application returned by the second operating system may be obtained within the third preset time length.

In an operation B5, the information of the application processing entry of the second application installed in the first operating system may be obtained from the application information.

The operation B6 may further be performed. When obtaining the information of the application processing entry of the first application is completed and obtaining the information of the application processing entry of the second application is completed, the application processing entry of the first application and the application processing entry of the second application may be displayed in the application management interface.

When the triggering operation is performed on the application processing entry of the first application in the application management interface, operations B7-B12 may be performed. When the triggering operation is performed on the application processing entry of the first application in the application management interface, operations B13-B14 may be performed.

In an operation B7, in response to the triggering operation performed on the application processing entry of the first application, the management item interface of the first application may be entered, and the application processing information of the first application may be obtained from the application information.

In an operation B8, in the case that obtaining the application processing information of the first application is complete, the application management items of the first application carrying the application processing information may be displayed in the management item interface of the first application.

In an operation B9, in response to the triggering operation performed on the application management item of the first application, the first operating system may send the processing instruction corresponding to the triggering operation to the second operating system. The processing instruction may be used to instruct the second operating system to perform the corresponding processing on the first application. The processing instruction may include at least one of: the memory data clearing instruction, the cache data clearing instruction, the application stopping running instruction, or the application uninstallation instruction.

In an operation B10, the processing result of the first application program returned by the second operating system may be received.

In an operation B11, when the processing result indicates that the second operating system fails in performing the processing on the first application, the operation of sending the generated processing instruction to the second operating system may be repeated, and the operation of sending the processing instruction may be stopped when the third stop condition is satisfied. Furthermore, the management item interface may not be updated, and the application management items may still be displayed in the management item interface.

In an operation B12, when the processing result indicates that the second operating system successfully performs the processing on the first application, the management item interface may be updated, and information corresponding to the processing result may be displayed in the updated management item interface.

In an operation B13, in response to the triggering operation performed on the application processing entry of the second application, the management item interface of the second application may be entered, and the application processing information of the second application may be obtained. In the case that obtaining the application processing information of the second application is completed, the application management item of the second application carrying the application processing information may be displayed in the management item interface of the second application.

In an operation B14, in response to the triggering operation performed on the application management item of the second application, corresponding processing may be performed on the second application.

It should be understood that, although various operations in the flow charts involved in the above embodiments are shown sequentially and indicated by arrows, the operations may not necessarily be executed sequentially in the order indicated by the arrows. Unless expressly stated herein, there is no strict order in executing these operations, and the operations may be executed in other orders. Moreover, at least a portion of operations in the flow charts involved in the above embodiments may include a plurality of sub-operations or stages. The plurality of sub-operations or stages may not necessarily be executed at the same moment but may be executed at different moments. The plurality of sub-operations or stages may not necessarily be executed sequentially but may be performed in alternation with at least a portion of other operations or sub-operations or stages.

Based on the same inventive concept, embodiments of the present disclosure further provide an application processing apparatus for implementing the application processing method described above. The problem to be solved by the apparatus may be similar to that in the above-described method. Therefore, specific limitations in one or more embodiments of the application processing apparatus provided below may be referred to the above description for the application processing method, and will not be repeated herein.

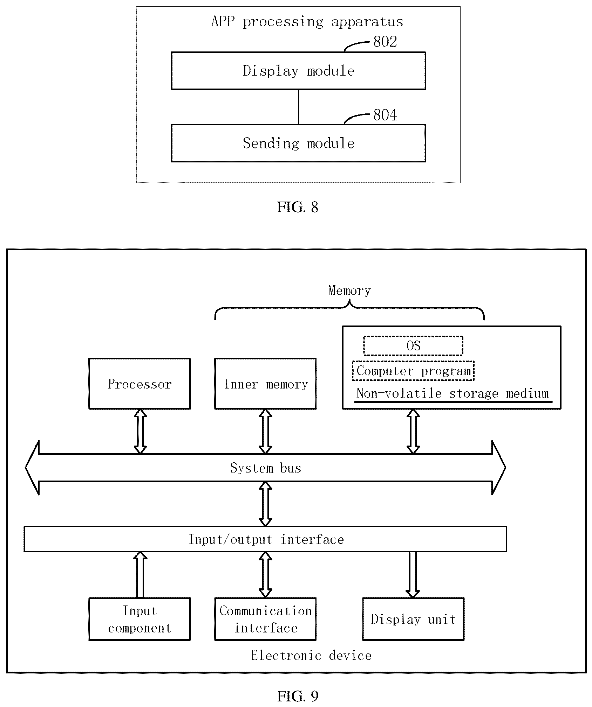

In an embodiment, as shown in FIG. 8, the application processing apparatus may be configured in an electronic device. The electronic device may include the first processor and the second processor, the first processor may run the first operating system, the second processor may run the second operating system. The application processing apparatus may include: a display module 802.

The display module 802 may be configured for the application management interface to be entered in the first operating system and for the application management interface to display the application processing entry of the first application installed in the second operating system.

The display module 802 may further be configured to enter, in response to the triggering operation performed on the application processing entry of the first application, the management item interface of the first application, and the application management items of the first application may be displayed in the management item interface of the first application.

According to the above-described application processing apparatus, the electronic device in the first operating system may enter the application management interface, the application processing entry of the first application installed in the second operating system may be displayed in the application management interface. In response to the triggering operation performed on the application processing entry of the first application, the management item interface of the first application may be entered, and the application management items of the first application may be displayed in the management item interface. That is, the electronic device may display, in the first operating system, the information such as the application management items of the first application installed in the second operating system. The information of the first application may be obtained without switching from the first operating system to the second operating system. Frequent switching between the first operating system and the second operating system may be avoided, and therefore, the resources of the electronic device may be saved.

In an embodiment, the above apparatus may further include an obtaining module. The display module 802 may further be configured to enter, in response to the triggering operation performed on the application processing entry of the first application, the management item interface of the first application. The obtaining module may further be configured to obtain the application processing information of the first application.

In the case that obtaining the application processing information of the first application is completed, the display module 802 may further configured to display, in the management item interface of the first application program, the application management item of the first application carrying the application processing information.

In an embodiment, as shown in FIG. 8, the above apparatus may further include a sending module 804. The sending module may be configured for the first operating system to send the first application information request to the second operating system. The second operating system, in response to the first application information request, may send the application processing information of the installed first application to the first operating system. The obtaining module may further be configured for the first operating system to obtain the application processing information of the first application returned by the second operating system.

In an embodiment, when the application processing information returned by the second operating system is not received within the preset time length, the sending module 804 may further be configured to send the first application information request to the second operating system, and sending the first application information request may be stopped when the first stop condition is satisfied. The preset time length may start counting at the time point when the first operating system sends the first application information request.

In an embodiment, the display module 802 may further be configured to display the preset waiting image during the time length in which the second operating system obtains the application processing information of the first application. When the application processing information of the first application returned by the second operating system is obtained, displaying the preset waiting image may be eliminated or hidden.

In an embodiment, the display module 802 may be configured to enter, in response to the triggering operation performed on the application management entry, the application management interface in the first operating system. The obtaining module may further be configured to obtain the application information of the first application installed in the second operating system. The application information of the first application may include the application processing entry and the application processing information of the first application. The obtaining module may further be configured to obtain, in response to the triggering operation performed on the application processing entry of the first application, the application processing information of the first application from the application information.

In an embodiment, the display module 802 may further be configured to enter, in response to the triggering operation performed on the application management entry, the application management interface in the first operating system. The obtaining module may further be configured to obtain the information of the application processing entry of the first application installed in the second operating system. In the case that obtaining the information of the application processing entry of the first application is completed, the display module 802 may be configured to display the application processing entry of the first application in the application management interface.

In an embodiment, the sending module 804 may be configured to send the second application information request to the second operating system. The second application information request may be used to instruct the second operating system to send the information of the application processing entry of the installed first application to the first operating system. The obtaining module may further be configured to obtain the information of the application processing entry of the first application returned by the second operating system.

In an embodiment, when the information of the application processing entry returned by the second operating system is not received within the preset time length, the operation of sending the second application information request to the second operating system may be repeated. When the second stop condition is satisfied, the operation of sending the second application information request may be stopped.

In an embodiment, the above-described display module 802 may further be configured to enter, in response to the triggering operation performed on the application management entry, the application management interface in the first operating system. The obtaining module may further be configured to obtain the information of the application processing entry of the second application installed in the first operating system. After obtaining the information of the application processing entry of the first application is completed and obtaining the information of the application processing entry of the second application is completed, the display module 802 may be configured to display the application processing entry of the first application and the application processing entry of the second application in the application management interface.

In an embodiment, the application processing entry of the second application installed in the first operating system may further be displayed in the application management interface. The above apparatus may further include an application processing module. The display module 802 may further be configured to enter, in response to the triggering operation performed on the application processing entry of the second application, the management item interface of the second application. The application management items of the second application may be displayed in the management item interface of the second application. The application processing module may further be configured to perform, in response to the triggering operation performed on the application management items of the second application, corresponding processing on the second application.

In an embodiment, the display module 802 may further be configured to enter, in response to the triggering operation performed on the application processing entry of the second application, the management item interface of the second application. The obtaining module may be configured to obtain the application processing information of the second application. When obtaining the application processing information of the second application is completed, the display module 802 may further be configured to display, in the management item interface of the second application, the application management item of the second application carrying the application processing information.

In an embodiment, the sending module 804 may be configured to, in response to the triggering operation performed on the application management item of the first application, send the processing instruction corresponding to the triggering operation from the first operating system to the second operating system. The processing instruction may be used to instruct the second operating system to perform the corresponding processing on the first application.

In an embodiment, the obtaining module may further be configured to receive the processing result for the first application returned by the second operating system, and the information corresponding to the processing result may be displayed.

In an embodiment, when the processing result indicates that the second operating system fails in performing the processing on the first application, the sending module 804 may be configured to send the generated processing instruction to the second operating system. Sending the processing instructions may be stopped when the third stop condition is satisfied.

In an embodiment, the processing instruction may include at least one of the memory data clearing instruction, the cache data clearing instruction, the application stop-running instruction, or an application uninstallation instruction.

In an embodiment, when the processing result indicates that the second operating system successfully performs the processing on the first application, the display module 802 may further be configured to update the management item interface and to display the information corresponding to the processing result in the updated management item interface. When the processing result indicates that the second operating system fails in performing the processing on the first application, the management item interface may not be updated, and the application management item may still be displayed in the management item interface.

The various modules in the above application processing apparatus may be realized in whole or in part by means of software, hardware and combinations thereof. Each of the various modules may be embedded in or independent of a processor in the electronic device in the form of hardware, or may be stored in a memory in the electronic device in the form of software. In this way, the processor may invoke the modules to perform corresponding operations.

In an embodiment, an electronic device is provided. The electronic device may be a terminal, and an internal structure thereof may be shown in FIG. 9. The electronic device may include a processor, a memory, an input/output interface, a communication interface, a display component, and an input component. The processor, the memory and the input/output interface may be connected to each other via a system bus, and the communication interface, the display component and the input component may be connected to the system bus via the input/output interface. The processor of the electronic device may be configured to provide computing and control capabilities. The memory of the electronic device may include a non-volatile storage medium, an internal memory. The non-volatile storage medium may store an operating system and a computer program. The internal memory may provide an environment for the operating system and the computer program in the non-volatile storage medium to operate therein. The input/output interface of the electronic device may be configured to exchange information between the processor and an external device. The communication interface of the electronic device may be configured to communicate with an external terminal in a wired or wireless manner. Wireless connection may be achieved through WIFI, a mobile cellular network, near field communication (NFC), and so on. The computer program may be executed by the processor to implement the application processing method. The display unit of the electronic device may be configured to generate a visually visible picture and may be a display screen, a projection device or a virtual reality imaging device. The display may be a liquid crystal display or an electronic ink display. The input component of the electronic device may be a touch layer covering on the display screen, or may be a button, a trackball or a touchpad arranged on a housing of the electronic device, or may be an external keyboard, a touchpad or a mouse, and the like.

It will be understood by any ordinary skilled person in the art that structures illustrated in FIG. 9 is only a block diagram of a portion of the structure related to the embodiments of the present disclosure, and do not limit the electronic device of the present disclosure. The electronic device may include more or fewer components than those shown in the drawings, or some of the components may be combined with each other, or the components may be arranged in a different manner.

The present disclosure may further provide a computer-readable storage medium. One or more non-volatile computer-readable storage media may be provided. When computer-executable instructions are executed by one or more processors, the processor may be caused to perform the operations of the application processing method.

The present disclosure may further provide a computer program product including instructions. When the computer program product is run on a computer, the computer may be caused to perform the application processing method.

It is to be noted that the user information (including, but not limited to, user device information, user personal information, and so on) and data (including, but not limited to, data used for analysis, stored data, displayed data, and so on) involved in the present disclosure are information and data authorized by the user or fully authorized by parties. Collection, use and processing of the relevant data need to comply with relevant laws and regulations of the relevant countries and regions and relevant standards in the relevant countries and regions.

Any ordinary skilled person in the art may understand that all or part of the processes in the methods of the above embodiments may be achieved by a computer program instructing the relevant hardware. The computer program may be stored in a non-volatile computer-readable storage medium. When the computer program is being executed, processes such as those in the above embodiments may be included. Any reference to a memory, a database, or other medium used in the embodiments of the present disclosure may include at least one of a non-volatile memory and a volatile memory. The non-volatile memory may include a Read-Only Memory (ROM), a magnetic tape, a floppy disk, a flash memory, an optical memory, a high-density embedded non-volatile memory, a Resistance-Resistive Memory (ReRAM), a Magnetoresistive Random Access Memory (MRAM), a Ferroelectric Random Access Memory (FRAM), a Phase Change Memory (PCM), a Graphene Memory and so on. The volatile memory may include a Random Access Memory (RAM) or an external cache memory, and the like. As an illustration and not as a limitation, the RAM may be in various forms, such as a Static Random Access Memory (SRAM) or a Dynamic Random Access Memory (DRAM), and the like. The databases involved in the embodiments of the present disclosure may include at least one of: a relational database and a non-relational database. The non-relational database may include a blockchain-based distributed database and the like, which will not be limited herein. The processor in each embodiment may be a general-purpose processor, a central processing unit, a graphical processor, a digital signal processor, a programmable logic apparatus, a data processing logic apparatus based on quantum computing, and the like, which will not be limited herein.

The various technical features of the above-described embodiments may be combined arbitrarily. Not all possible combinations of the various technical features of the above-described embodiments are described herein for the sake of conciseness of description. However, as long as a combination does not cause contradictory, the combination shall be considered as being within the scope of the present disclosure.

The above-described embodiments show only some embodiments of the present disclosure, which are described in a more specific and detailed manner. The description does not limit the scope of the present disclosure. It should be noted that, for any ordinary skilled person in the art, various deformations and improvements can be made without departing from the conception of the present disclosure, all of which fall within the scope of the present disclosure. Therefore, the scope of the present disclosure shall be subject to the attached claims.

## Claims

1. An application processing method, performed by an electronic device, the electronic device comprising a first processor and a second processor, the first processor running a first operating system, the second processor running a second operating system, the method comprising:
entering an application management interface in the first operating system, wherein an application processing entry of a first application installed in the second operating system is displayed in the application management interface; and
in response to a triggering operation performed on the application processing entry of the first application, entering a management item interface of the first application, wherein an application management item of the first application is displayed in the management item interface of the first application.

2. The application processing method according to claim **1,** wherein, in response to a triggering operation performed on the application processing entry of the first application, the entering the management item interface of the first application, the management item interface of the first application displaying the application management item of the first application, comprises:
in response to the triggering operation performed on the application processing entry of the first application, entering the management item interface of the first application and obtaining application processing information of the first application; and
displaying, in the management item interface of the first application, an application management item of the first application carrying the application processing information in a case that obtaining the application processing information of the first application is completed.

3. The application processing method according to claim 2, wherein the obtaining application processing information of the first application, comprises:
sending, by the first operating system, a first application information request to the second operating system;
sending, by the second operating system in response to the first application information request, the application processing information of the installed first application to the first operating system; and
obtaining, by the first operating system operating, the application processing information of the first application returned by the second operating system.

4. The application processing method according to claim 3, wherein, after the sending, by the first operating system, the first application information request to the second operating system, the method further comprises:
in a case that the first operating system does not receive the application processing information returned by the second operating system within a preset time length, repeating the sending the first application information request to the second operating system, wherein the sending the first application information request to the second operating system is stopped when a first stop condition is satisfied; wherein the preset time length starts counting at a time point when the first operating system sends the first application information request.

5. The application processing method according to claim 3, wherein, before the obtaining, by the first operating system operating, the application processing information of the first application returned by the second operating system, the method further comprises:
displaying a preset waiting image during a time length in which the second operating system obtains the application processing information of the first application; and eliminating or hiding the displaying the preset waiting image when the application processing information of the first application returned by the second operating system is obtained.

6. The application processing method according to claim 2, wherein, the entering an application management interface in the first operating system, comprises:
in response to a triggering operation performed on an application management entry, entering the application management interface in the first operating system and obtaining application information of the first application installed in the second operating system; wherein the application information of the first application comprises the application processing entry and the application processing information of the first application;
wherein, in response to the triggering operation performed on the application processing entry of the first application, the entering the application management interface in the first operating system and obtaining application processing information of the first application installed in the second operating system, comprises:
in response to the triggering operation performed on the application processing entry of the first application, entering the management item interface of the first application and obtaining the application processing information of the first application from the application information.

7. The application processing method according to claim 1, wherein, the entering the application management interface in the first operating system, and the application management interface displaying the application processing entry of the first application installed in the second operating system, comprises:
in response to the triggering operation performed on the application management entry, entering the application management interface in the first operating system and obtaining information of the application processing entry of the first application installed in the second operating system; and
displaying the application processing entry of the first application in the application management interface in the case that obtaining the information of the application processing entry of the first application is completed.

8. The application processing method according to claim 7, wherein the obtaining information of the application processing entry of the first application installed in the second operating system, comprises:
sending a second application information request to the second operating system; wherein the second application information request is used to instruct the second operating system to send the information of the application processing entry of the installed first application to the first operating system; and
obtaining the information, returned by the second operating system, of the application processing entry of the first application.

9. The application processing method according to claim 7 or 8, further comprising:
in response to the triggering operation performed on the application management entry, entering the application management interface in the first operating system and obtaining information of an application processing entry of a second application installed in the first operating system;
wherein the displaying the application processing entry of the first application in the application management interface in the case that obtaining the information of the application processing entry of the first application is completed, comprises:
in the case that obtaining the information of the application processing entry of the first application is completed and obtaining the information of the application processing entry of the second application is completed, displaying the application processing entry of the first application and the application processing entry of the second application in the application management interface.

10. The application processing method according to any one of claims 1, 2, or 7, further comprising:
in response to the triggering operation performed on the application management item of the first application, the first operating system sending a processing instruction, which is generated corresponding to the triggering operation, to the second operating system, wherein the processing instruction is used to instruct the second operating system to perform a corresponding processing on the first application.

11. The application processing method according to claim 10, wherein after sending the processing instruction to the second operating system, the method further comprises:
receiving a processing result of the first application returned by the second operating system, and displaying information corresponding to the processing result.

12. The application processing method according to claim 11, wherein the processing instruction comprises at least one of: a memory data clearing instruction, a cache data clearing instruction, an application stop-running instruction, and an application uninstallation instruction.

13. The application processing method according to claim 11, wherein after the receiving the processing result of the first application returned by the second operating system, the method further comprises:
in a case that the processing result indicates that the second operating system fails in performing the processing on the first application, repeating sending the processing instruction to the second operating system, wherein the sending the processing instruction to the second operating system is stopped when a third stop condition is satisfied.

14. The application processing method according to claim 11, wherein the displaying information corresponding to the processing result, comprises:
in a case that the processing result indicates that the second operating system successfully performs the processing on the first application, updating the management item interface and displaying the information corresponding to the processing result in the updated management item interface; and/or
in a case that the processing result indicates that the second operating system fails in performing the processing on the first application, not updating the management item interface and continuing displaying the application management item in the management item interface.

15. An application processing apparatus, configured in an electronic device, the electronic device comprising a first processor and a second processor, the first processor running a first operating system, the second processor running a second operating system, the application processing apparatus comprising:
a display module, configured to enter an application management interface in the first operating system, wherein an application processing entry of a first application installed in the second operating system is displayed in the application management interface;
wherein the display module is further configured to enter the management item interface of the first application in response to a triggering operation performed on the application processing entry of the first application, wherein an application management item of the first application is displayed in the management item interface of the first application.

16. The application processing apparatus according to claim 15, further comprising an obtaining module, configured to: enter the management item interface of the first application in response to the triggering operation performed on the application processing entry of the first application; obtain application processing information of the first application;
wherein the obtaining module is further configured to: display, in the management item interface of the first application, an application management item of the first application carrying the application processing information in a case that obtaining the application processing information of the first application is completed.

17. The application processing apparatus according to claim 16, further comprising a sending module, configured to: send, by the first operating system, a first application information request to the second operating system;
wherein in response to the first application information request, the second operating system sends the application processing information of the installed first application to the first operating system; and
the display module is further configured for the first operating system to obtain the application processing information of the first application returned by the second operating system.

18. An electronic device, comprising a memory and a processor, wherein the memory stores a computer program; the computer program, when being executed by the processor, causes the processor to perform the application processing method according to any one of claims 1 to 14.

19. A computer readable storage medium, having a computer program stored thereon, wherein the computer program, when being executed by a processor, causes the processor to perform the method according to any one of claims 1 to 14.

20. A computer program product, comprising a computer program, wherein the computer program, when being executed by a processor, implements the method according to any one of claims 1 to 14.
